# EUROPEAN PATENT APPLICATION

(11) **EP 4 269 190 A1**
(43) Date of publication of application: **01.11.2023**
(21) Application number: 23169194.0
(22) Date of filing: 21.04.2023
(51) Int. Cl.: B60S 5/06, B60L 53/80

(54) **METHOD AND SYSTEM FOR ASSISTING IN PARKING VEHICLE IN PARKING POSITION**

(30) Priority: 25.04.2022 CN 202210438516
(71) Applicant: Nio Technology (Anhui) Co., Ltd, Hefei City, Anhui 230601 (CN)
(72) Inventor: WANG, Yifei, Hefei City, Anhui, 230601 (CN); ZOU, Jiyong, Hefei City, Anhui, 230601 (CN)
(74) Representative: Vossius & Partner Patentanwälte Rechtsanwälte mbB

(57) **Abstract**

The disclosure provides a method and system for assisting in parking a vehicle into a parking position. The parking position is located outside a battery swap station. The method includes: a monitoring step, a determining step, and a confirmation step. The monitoring step includes: starting a monitoring apparatus disposed on the battery swap station, so that the monitoring apparatus monitors an external area of the battery swap station. The determining step includes: determining, based on a monitoring result of the monitoring step, whether the vehicle is parked into the parking position, where if the vehicle is parked into the parking position, the confirmation step is further performed, or if the vehicle is not parked into the parking position, the monitoring step continues to be performed. The confirmation step includes: informing the vehicle of a message indicating that the vehicle has been parked into the parking position, and receiving a confirmation message from the vehicle, where if the confirmation message indicates that the vehicle has been parked in place, it indicates that the vehicle is completely parked in place into the parking position, or if the confirmation message indicates that the vehicle is not parked in place, the monitoring step continues to be performed.

## Description

### Technical Field

The disclosure relates to the field of vehicles, and in particular, to a method and system for assisting in parking a vehicle into a parking position.

### Background Art

Currently, a battery electric vehicle has two main energy supply modes: vehicle charging and battery swapping. In the energy supply mode of vehicle charging, alternating current slow charging causes long charging time and is limited by a parking place, while direct current fast charging has a high charging power and short charging time, but has great impact on the grid and shortens a service life of a battery. In the energy supply mode of battery swapping, a battery swap station may interact with the grid to achieve orderly charging to implement "peak shaving and energy storage" of a power load, thereby improving comprehensive utilization efficiency of a power device. In addition, the mode of battery swapping can quickly replenish energy to the electric vehicle, to shorten user's waiting time without damage to the battery life. Therefore, along public transport lines in first tier cities in China, there are quite high promotion value and economic significance to provide a battery swap service for the electric vehicle by using the battery swap station.

However, as users of the battery swap station increase, the battery swap station serves, within unit time, a gradually increasing number of vehicles with a battery to be swapped. In some cases, there may still be a queue even when the battery swap station operates at full load in the day. In this case, in addition to continuously improving mechanical efficiency during a battery swap, it is of great significance to effectively manage vehicles with a battery to be swapped and arrange battery swaps, to ensure orderly and reliable operation of the battery swap station.

### Summary

The disclosure provides a method and system for assisting in parking a vehicle into a parking position, to effectively help rapidly and accurately drive a vehicle with a battery to be swapped into a specific parking position outside a battery swap station, and to assist the battery swap station in effectively managing vehicles with a battery to be swapped.

According to a first aspect of the disclosure, a method for assisting in parking a vehicle into a parking position is provided. The parking position is located outside a battery swap station. The method includes: a monitoring step, a determining step, and a confirmation step. The monitoring step includes: starting a monitoring apparatus disposed on the battery swap station, so that the monitoring apparatus monitors an external area of the battery swap station. The determining step includes: determining, based on a monitoring result of the monitoring step, whether the vehicle is parked into the parking position, where if the vehicle is parked into the parking position, the confirmation step is further performed, or if the vehicle is not parked into the parking position, the monitoring step continues to be performed. The confirmation step includes: informing the vehicle of a message indicating that the vehicle has been parked into the parking position, and receiving a confirmation message from the vehicle, where if the confirmation message indicates that the vehicle has been parked in place, it indicates that the vehicle is completely parked in place into the parking position, or if the confirmation message indicates that the vehicle is not parked in place, the monitoring step continues to be performed.

Optionally, according to one or more embodiments of the first aspect, the method further includes a guiding step. The guiding step includes: receiving from the vehicle a message about a driving mode of the vehicle, and performing different parking assistance actions based on types of the driving mode.

Optionally, according to one or more embodiments of the first aspect, the different parking assistance actions include: if the driving mode is a manual driving mode, informing a driver and a passenger in the vehicle of position information of the parking position and position information of the vehicle; or if the driving mode is an autonomous driving mode, when the monitoring apparatus monitors the vehicle, calculating an offset between a current position of the vehicle and the parking position, and informing the vehicle of calculated offset information and position information of the vehicle.

Optionally, according to one or more embodiments of the first aspect, the confirmation step further includes: if the confirmation message indicates that the vehicle has been parked in place, informing the battery swap station to prepare for a battery swap.

Optionally, according to one or more embodiments of the first aspect, the monitoring apparatus includes a lidar sensor and/or an image sensor.

According to a second aspect of the disclosure, a system for assisting in parking a vehicle into a parking position is provided. The parking position is located outside a battery swap station. The system includes: a monitoring unit, a determining unit, and a confirmation unit. The monitoring unit includes a monitoring apparatus. The monitoring apparatus is disposed on the battery swap station, so that the monitoring unit is capable of performing a monitoring step to monitor an external area of the battery swap station. The determining unit is communicatively connected to the monitoring unit. The determining unit is configured to be capable of determining, based on a monitoring result of the monitoring unit, whether the vehicle is parked into the parking position. The confirmation unit is communicatively connected to the determining unit and the monitoring unit. The confirmation unit is configured to: when the determining unit determines that the vehicle is parked into the parking position, output a message indicating that the vehicle has been parked into the parking position, and receive a confirmation message from the vehicle, where if the confirmation message indicates that the vehicle has been parked in place, it indicates that the vehicle is completely parked in place into the parking position, or if the confirmation message indicates that the vehicle is not parked in place, the monitoring unit is informed to further perform the monitoring step.

Optionally, according to one or more embodiments of the second aspect, the system further includes a guiding unit. The guiding unit is configured to: receive from the vehicle a message about a driving mode of the vehicle, and perform different parking assistance actions based on types of the driving mode.

Optionally, according to one or more embodiments of the second aspect, the different parking assistance actions include: if the driving mode is a manual driving mode, informing a driver and a passenger in the vehicle of position information of the parking position and position information of the vehicle; or if the driving mode is an autonomous driving mode, when the monitoring apparatus monitors the vehicle, calculating an offset between a current position of the vehicle and the parking position, and informing the vehicle of calculated offset information and position information of the vehicle.

Optionally, according to one or more embodiments of the second aspect, the confirmation unit is further configured to: if the confirmation message indicates that the vehicle has been parked in place, inform the battery swap station to prepare for a battery swap.

Optionally, according to one or more embodiments of the second aspect, the monitoring apparatus includes a lidar sensor and/or an image sensor.

According to a third aspect of the disclosure, a computer storage medium is provided. The computer storage medium includes instructions. When the instructions are run, the method for assisting in parking a vehicle into a parking position according to any one of the embodiments in the first aspect of the disclosure is performed.

According to a fourth aspect of the disclosure, a battery swap station is provided. The battery swap station includes the system for assisting in parking a vehicle into a parking position according to any one of the embodiments in the second aspect of the disclosure.

The method and system for assisting in parking a vehicle into a parking position in the disclosure can effectively help park a vehicle with a battery to be swapped into the parking position and improve efficiency of parking the vehicle with a battery to be swapped into the parking position, so that the battery swap station can rapidly arrange a battery swap process, to ensure orderly and reliable operation of the battery swap station, meet a user requirement for a rapid battery swap to a great extent, and improve user experience of a battery swap.

In the disclosure, in an actual application scenario, an edge computing device, a link station, a vehicle, and a cloud form an effective service network. In the disclosure, the edge computing device uses artificial intelligence AI image inference as an entrance to assist in managing vehicles with a battery to be swapped, to create a full-self-service battery swap station process with automatic detection as a main part, vehicle-station communication as an auxiliary part, and cloud feedback as the basis.

### Brief Description of the Drawings

FIG. 1A and FIG. 1B are schematic diagrams of a battery swap station and an external environment thereof according to an embodiment of the disclosure;
FIG. 2 is a brief flowchart of a method for assisting in parking a vehicle into a parking position according to an embodiment of the disclosure;
FIG. 3 is a flowchart of a method for assisting in parking a vehicle into a parking position according to an embodiment of the disclosure;
FIG. 4 shows a position representation manner for describing a position of a vehicle 104 and a parking position 103 according to an embodiment of the disclosure; and
FIG. 5 shows a system for assisting in parking a vehicle into a parking position according to an embodiment of the disclosure.

### Detailed Description of Embodiments

The disclosure is described below with reference to the flowchart descriptions, the block diagram and/or the flowchart of the method and system according to the embodiments of the disclosure. It will be understood that each block of these flowchart descriptions and/or the block diagrams, and combinations of the flowchart descriptions and/or the block diagrams, can be implemented by computer program instructions. These computer program instructions can be provided to a processor of a general-purpose computer, dedicated computer, or another programmable data processing device to form a machine, so that the instructions executed by the processor of the computer or the another programmable data processing device create components for implementing the functions/operations specified in these flowcharts and/or blocks and/or one or more flow block diagrams.

These computer program instructions may be stored in a computer-readable memory, and the instructions can instruct a computer or another programmable processor to implement the functions in a specific manner, so that the instructions stored in the computer-readable memory generate a manufactured product containing instruction components that implement the functions/operations specified in one or more blocks of the flowcharts and/or the block diagrams.

These computer program instructions may be loaded onto the computer or the further programmable data processor, so that a series of operations and steps are performed on the computer or the further programmable processor, to generate a computer-implemented process. As such, the instructions executed on the computer or the further programmable data processor provide steps for implementing the functions or operations specified in one or more blocks in the flowcharts and/or block diagrams. It should also be noted that in some alternative implementations, the functions/operations shown in the blocks may not occur in the order shown in the flowcharts. For example, two blocks shown in sequence may actually be executed substantially simultaneously or the blocks may sometimes be executed in a reverse order, depending on the functions/operations involved.

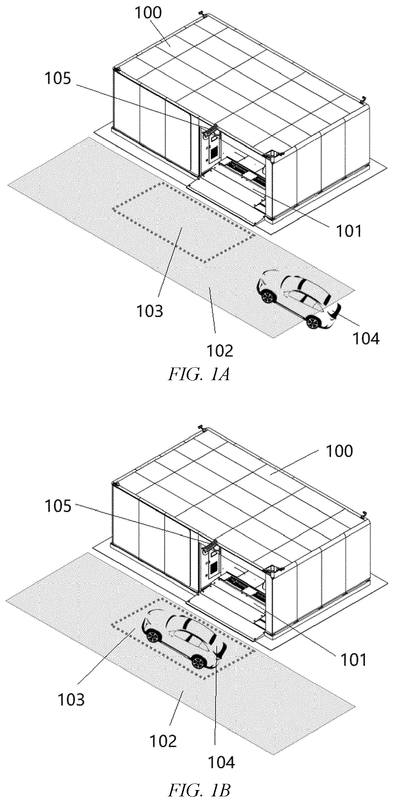

A battery swap station 100 and an external environment thereof according to one implementation of the disclosure will be described below in conjunction with FIG. 1A and FIG. 1B.

FIG. 1A and FIG. 1B are schematic diagrams of a battery swap station 100 and an external environment thereof according to an embodiment of the disclosure. FIG. 1A and FIG. 1B respectively show states of a vehicle 104 with a battery to be swapped in different positions outside the battery swap station 100. As shown in FIG. 1A and FIG. 1B, the battery swap station 100 is a box type structure, and is configured to allow the vehicle 104 to perform a battery swap operation. An opening is provided on a front wall of the battery swap station 100, to form a battery swap station entrance 101. The battery swap station entrance 101 is set to be large enough to allow the vehicle 104 to be driven into the battery swap station 100. Therefore, when a battery of the vehicle 104 needs to be swapped, the vehicle 104 with a battery to be swapped may be driven into a battery swap area in the battery swap station 100 through the battery swap station entrance 101, to perform a battery swap operation in the battery swap area.

A monitoring apparatus 105 is disposed on the battery swap station 100. Optionally, the monitoring apparatus 105 is disposed above the battery swap station entrance 101, so that the monitoring apparatus 105 can monitor a driving state of the vehicle 104 in a specific area outside the battery swap station 100 and not far away from the battery swap station entrance 101. The monitoring apparatus 105 may include a calibration sensor, for example, a lidar sensor directly for three-dimensional position information and/or an image sensor.

An outside area of the battery swap station 100 includes a monitoring area 102 and a parking position 103. The monitoring area 102 is an area that is outside the battery swap station 100 and that can be monitored by the monitoring apparatus 105. The parking position 103 is a position in which the vehicle 104 is temporarily parked before being driven into the battery swap station 100 to perform a battery swap. As shown in FIG. 1A and FIG. 1B, the parking position 103 is located at a short distance outside the battery swap station entrance 101, and the parking position 103 is located in a coverage area of the monitoring area 102.

In the disclosure, the parking position 103 is a fixed position designated outside the battery swap station 100. The vehicle 104 with a battery to be swapped may be parked into the parking position 103 before entering the battery swap station 100 to perform a battery swap. In other words, when a battery of the vehicle 104 needs to be swapped, the vehicle 104 with a battery to be swapped may be driven into the parking position 103, and then parked from the parking position 103 into the battery swap area in the battery swap station 100 for a subsequent battery swap operation.

The parking position 103 stipulates an approximate position and direction of the vehicle 104 with a battery to be swapped that is parked in front of the battery swap station 100. In the disclosure, the parking position 103 is fixedly disposed outside the battery swap station 100, so that a driving path along which the vehicle 104 with a battery to be swapped is driven from the outside of the battery swap station 100 into the battery swap station 100 is fixed, a driving process in which the vehicle 104 is driven from the outside of the battery swap station 100 into the battery swap station 100 is managed, and a parking path of the vehicle 104 before a battery swap and a parking process of the vehicle 104 before a battery swap are managed by the battery swap station 100. For the vehicle 104 with a battery to be swapped that prepares to start automatic parking, the parking position 103 may further effectively control the vehicle 104 to be automatically parked into the battery swap station 100 according to a preset parking algorithm, which is an important means of automatic parking for a battery swap.

As shown in FIG. 1A and FIG. 1B, the parking position 103 in front of the battery swap station 100 is indicated by a dashed box marking. In another embodiment, the parking position 103 may alternatively be marked by using another method. However, these markings of the parking position 103 may fail during actual operation due to various reasons. For example, a common marking may refract light or become invisible due to water accumulated in a heavy rain. In addition, the marking may be covered by snow in extreme snowy weather and cannot be recognized by a vehicle with a battery to be swapped. A marking on a wall is often blocked and damaged, resulting in a recognition failure. It may be learned that an effective manner is of great significance to assist in continuously providing the effective parking position 103 for the vehicle 104 with a battery to be swapped in various complex scenarios. This manner can reduce a parking risk, ensure safety of a driver and a passenger, improve operation efficiency of the battery swap station, and also provide good user experience.

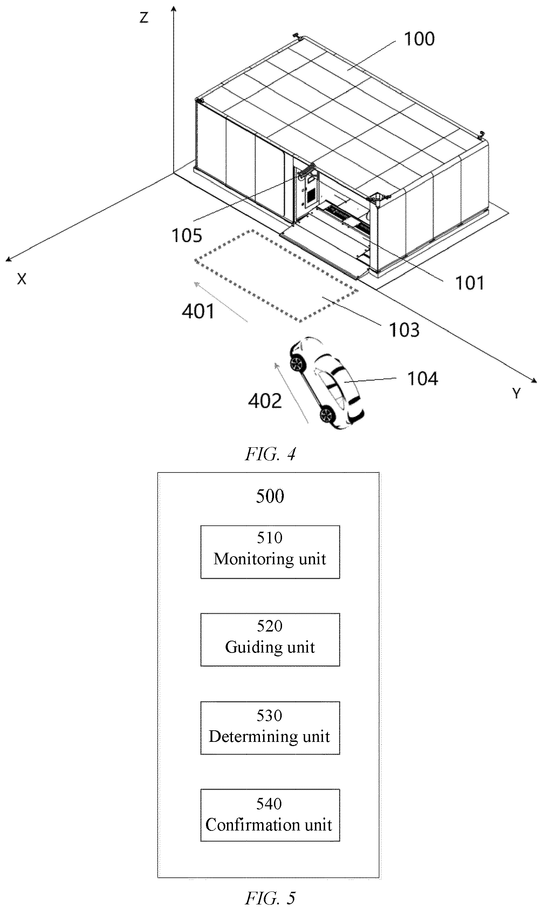

The battery swap station 100 in the disclosure includes a system 500 (as shown in FIG. 5) for assisting in parking the vehicle 104 into the parking position 103. The system 500 can provide the effective parking position 103 for the vehicle 104 with a battery to be swapped, and also assist in parking the vehicle 104 into the parking position 103. The disclosure helps smoothly and rapidly park the vehicle 104 with a battery to be swapped into the parking position 103, to assist the battery swap station 100 in managing the vehicle 104 with a battery to be swapped, so that a battery swap process of the battery swap station 100 is accelerated.

In this embodiment, a size of the parking position 103 is approximately the same as a size of an area occupied by the vehicle 104 with a battery to be swapped or slightly greater than a size of an area occupied by the vehicle 104 with a battery to be swapped. With a specified position and size, the monitoring area 102 can substantially cover a parking path along which the vehicle 104 is parked into the parking position 103 nearby the parking position 103, so that the monitoring apparatus 105 can monitor, in most cases, an entire parking process in which the vehicle 104 is parked into the parking position 103.

FIG. 1A shows a state of the vehicle 104 just driven into the monitoring area 102. In this case, the monitoring apparatus 105 can monitor the vehicle 104 located in the monitoring area 102. FIG. 1B shows a state of the vehicle 104 completely parked in place into the parking position 103. In this case, the vehicle 104 is completely parked into the parking position 103, and a parking inclination angle of the vehicle 104 is the same as an inclination angle of the parking position 103.

In the method for assisting in parking a vehicle into a parking position provided in the disclosure, the fixed parking position is disposed outside the battery swap station, whether the vehicle is parked into the parking position is determined in real time by monitoring a process in which the vehicle is parked into the parking position outside the battery swap station, and whether the vehicle has been parked in place is further confirmed with the vehicle to finally determine that the vehicle is completely parked into the parking position. In a scenario of a full-self-service battery swap station, the above method can implement and improve, in an unattended manner, a process and a method of forming an operation of assisting in parking the vehicle into the parking position outside the battery swap station, to protect safety of the vehicle with a battery to be swapped and safety of a driver and a passenger, maintain order of the unattended battery swap station, and ensure operation efficiency of the battery swap station.

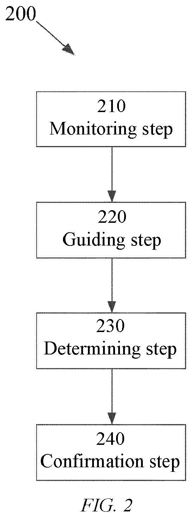

A method 200 for assisting in parking the vehicle 104 into the parking position 103 according to one implementation of the disclosure will be described below in conjunction with FIG. 2.

FIG. 2 is a brief flowchart of the method 200 for assisting in parking the vehicle 104 into the parking position 103 according to an embodiment of the disclosure. As shown in FIG. 2, the method 200 includes: a monitoring step 210, a guiding step 220, a determining step 230, and a confirmation step 240.

The monitoring step 210 includes: starting the monitoring apparatus 105 disposed on the battery swap station 100, so that the monitoring apparatus 105 monitors an external area of the battery swap station 100. As shown in FIG. 1A and FIG. 1B, in this embodiment, the external area of the battery swap station 100 monitored by the monitoring apparatus 105 is the monitoring area 102. In some embodiments, the monitoring step 210 may start to be performed when the vehicle 104 with a battery to be swapped receives a battery swap permission from the battery swap station 100, so that the monitoring apparatus 150 starts to monitor the monitoring area 102.

Optionally, the guiding step 220 includes receiving a driving mode of the vehicle 104, so that the system 500 for assisting in parking the vehicle 104 into the parking position 103 can determine, based on the driving mode of the vehicle 104, a guiding manner for assisting in parking the vehicle 104 into the parking position 103, to perform a corresponding parking assistance action. If the driving mode is a manual driving mode, the system 500 informs a driver and a passenger in the vehicle 104 of position information of the parking position 103 and current position information of the vehicle 104. In some embodiments, the system 500 may inform a driver and a passenger of a message by using a display apparatus on the vehicle 104. In this case, the driver and the passenger can be assisted in parking the vehicle 104 in the manual driving mode into the parking position 103 based on the received message. If the driving mode is an autonomous driving mode, when the monitoring apparatus 150 monitors the vehicle 104, the system 500 may calculate an offset between a current position of the vehicle 104 and the parking position 103, and inform the vehicle 104 of calculated offset information and position information of the vehicle 104. In an embodiment of the disclosure, the offset information includes: a distance (distance deviation) between the current position of the vehicle 104 and the parking position 103, and an angle offset (direction deviation) of the current position of the vehicle 104 relative to the parking position 103. In some embodiments, the offset between the current position of the vehicle 104 and the parking position 103 may be determined based on a position of a central point between axle centers of two front wheels of the vehicle 104. In another embodiment, the offset information may alternatively be determined on another basis. After the offset information is received, the vehicle 104 in the autonomous driving mode may be assisted in being parked into the parking position 103 based on the received message.

In some embodiments, based on different calibration sensors used by the monitoring apparatus 150, the offset information between the current position of the vehicle 104 and the parking position 103 may be obtained in the following manner.

Optionally, if a lidar sensor directly for three-dimensional position information is selected as a calibration sensor of the monitoring apparatus 150, the offset information between the current position of the vehicle 104 and the parking position 103 can be obtained by comparing the calculated parking position 103 with an actually obtained sensor feedback result about the position of the vehicle 104. The calculated parking position 103 may be data information obtained by accumulating data for a long time in advance and performing training through combination of an artificial intelligence (AI) algorithm and an image algorithm before the system 500 for assisting in parking the vehicle 104 into the parking position 103 is launched.

Optionally, if an image sensor is selected as a calibration sensor of the monitoring apparatus 150, the position of the vehicle 104 may be deduced according to an AI algorithm when the image sensor monitors the vehicle 104, and then deduced image pixel position information is converted into a projection space of the monitoring apparatus 150. Because a mounting angle and a mounting position of the monitoring apparatus 150 are fixed, a distance between each pixel and the parking position 103 is also fixed. Therefore, the offset information between the current position of the vehicle 104 and the parking position 103 in the presence of the image sensor may be obtained in the above manner.

After the offset information between the current position of the vehicle 104 and the parking position 103 is obtained, the system 500 may convert the obtained offset information into information in a form accepted by both the side of the vehicle 104 and the side of the battery swap station 100, and send converted data information about the offset to the vehicle side, so that the vehicle 104 can be automatically parked into the parking position 103 based on the offset data information.

The above parking assistance action can assist in smoothly parking the vehicle 104 in the corresponding manual driving mode or the corresponding autonomous driving mode into the parking position 103. In this embodiment, an appropriate parking assistance manner is selectively provided for the vehicle 104 based on types of the driving mode of the vehicle 104. In some other embodiments, the types of the driving mode may not be based on. In other words, in some other embodiments, regardless of the manual driving mode and the autonomous driving mode, a same parking assistance manner may be used to guide and park the vehicle 104 into the parking position 103.

The determining step 230 includes a step that a station side of the battery swap station 100 determines whether the vehicle 104 arrives at the parking position 103, so that the battery swap station 100 actively manages the vehicle 104. Optionally, the determining step 230 includes: determining, based on a monitoring result of the monitoring step 210, whether the vehicle 104 is parked into the parking position 103, where if the vehicle is parked into the parking position, the confirmation step 240 is further performed, or if the vehicle is not parked into the parking position, the monitoring step 210 continues to be performed.

The confirmation step 240 includes a step that whether the vehicle 104 arrives at the parking position 103 is confirmed with the vehicle 104, to ensure through interactive confirmation of the battery swap station 100 and the vehicle 104 that the vehicle 104 is parked in place into the parking position 103. The confirmation step 240 includes: informing the vehicle 104 of a message indicating that the vehicle 104 has been parked into the parking position 103, and receiving a confirmation message from the vehicle 104. If the confirmation message indicates that the vehicle 104 has been parked in place, it indicates that the vehicle 104 is completely parked in place into the parking position 103. In this case, the system 500 for assisting in parking the vehicle 104 into the parking position 103 may inform the battery swap station 100 to prepare for a battery swap. If the confirmation message indicates that the vehicle 104 is not parked in place, the monitoring step 210 continues to be performed.

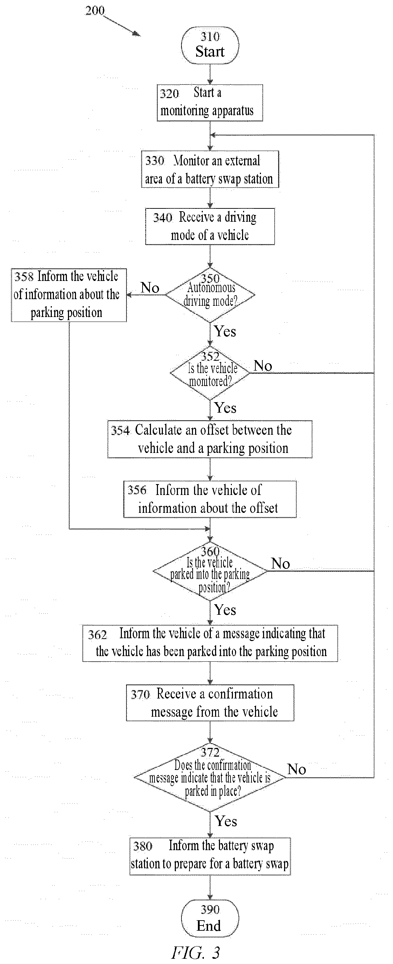

In the disclosure, the method 200 for assisting in parking the vehicle 104 into the parking position 103 assists in parking the vehicle 104 into the parking position 103 through cooperation of the vehicle side and the station side. A specific process of the method 200 for assisting in parking a vehicle into a parking position according to one implementation of the disclosure will be described below in conjunction with FIG. 3.

FIG. 3 is a flowchart of the method 200 for assisting in parking the vehicle 104 into the parking position 103 according to an embodiment of the disclosure. As shown in FIG. 3, the method 200 for assisting in parking the vehicle 104 into the parking position 103 starts with step 310. Optionally, when the system 500 for assisting in parking the vehicle 104 into the parking position 103 learns that the vehicle 104 receives a permission to enter the battery swap station 100 for a battery swap, the system 500 starts step 310. In another embodiment, the system 500 may alternatively start step 310 under another condition. In the method 200, subsequent step 320 is performed after step 310 is started.

In step 320, the monitoring apparatus 105 disposed on the battery swap station 100 is started. The monitoring apparatus 105 includes a calibration sensor. Optionally, the calibration sensor includes a lidar sensor and/or an image sensor. Step 330 is performed after step 320.

In step 330, the started monitoring apparatus 105 monitors the external area of the battery swap station 100 to monitor a target. In this embodiment of the disclosure, the target is the vehicle 104 with a battery to be swapped. The external area monitored by the monitoring apparatus 105 may be the monitoring area 102 shown in FIG. 1A and FIG. 1B. Step 340 is performed after step 330.

In step 340, the system 500 starts to receive the driving mode of the vehicle 104. After receiving the permission to enter the battery swap station 100 for a battery swap, the vehicle 104 may send the driving mode to the system 500 in a form of a message. In this embodiment, the vehicle 104 includes two driving modes: a manual driving mode and an autonomous driving mode. After the system 500 receives the driving mode of the vehicle 104 in step 340, the system 500 further performs step 350.

In step 350, the system 500 determines whether the driving mode received in step 340 is the autonomous driving mode or the manual driving mode. If the system 500 determines that the received driving mode is the autonomous driving mode, step 352 is further performed, so that a parking assistance action is performed on the vehicle 104 in the autonomous driving mode. If the system 500 determines that the received driving mode is not the autonomous driving mode but the manual driving mode, step 358 is further performed, so that a parking assistance action is performed on the vehicle 104 in the manual driving mode.

The parking assistance action for the vehicle 104 in the autonomous driving mode includes step 352, step 354, and step 356.

In step 352, the system 500 determines whether the monitoring apparatus 105 monitors the vehicle 104. If the system 500 monitors the vehicle 104, step 354 is further performed. If the system 500 does not monitor the vehicle 104, step 330 is performed again, so that the monitoring area 102 is cyclically monitored. As shown in FIG. 3, in this embodiment of the disclosure, in each cycle of the process of monitoring the monitoring area 102, the system 500 performs step 340 of receiving the driving mode of the vehicle 104 after step 330, to update in real time the change of the driving mode, so that a subsequent parking assistance action can be performed based on a latest driving mode. In another embodiment, it is possible not to update the change of the driving mode in each cycle of the process of monitoring the monitoring area 102. In other words, in this embodiment, the driving mode of the vehicle 104 may be received only once at the beginning of the method 200 without updating the change of the driving mode in each cycle of the process of monitoring the monitoring area 102.

In step 354, the system 500 calculates, based on a monitoring result of the monitoring apparatus 105, an offset between the current position of the vehicle 104 and the parking position 103. In some embodiments, the offset information between the current position of the vehicle 104 and the parking position 103 may be obtained in the following manner: If the monitoring apparatus 105 includes the lidar sensor directly for three-dimensional position information, the offset between the parking position 103 and a sensor feedback result about the monitored position of the vehicle 104 may be directly calculated; or if the monitoring apparatus 150 includes the image sensor, calculation may be performed according to the artificial intelligent (AI) algorithm. For example, the monitored position of the vehicle 104 is deduced according to the AI algorithm, and then deduced image pixel position information of the vehicle 104 is converted into a projection space of the monitoring apparatus 150, so that the offset between the current position of the vehicle 104 and the parking position 103 is calculated. Step 356 is performed after step 354.

In step 356, the system 500 informs the vehicle 104 of information for assisting in automatically parking the vehicle 104, so that the vehicle 104 that receives the information can automatically schedule a next parking action based on the information for assisting in automatically parking the vehicle 104. Optionally, the information for assisting in automatically parking the vehicle 104 includes information about the offset, calculated by the system 500, between the current position of the vehicle 104 and the parking position 103 and information about the current position of the vehicle 104. Step 360 is performed after step 356.

The parking assistance action for the vehicle 104 in the manual driving mode includes step 358. In step 358, the system 500 informs a driver and a passenger in the vehicle 104 of information for assisting in manual parking, so that the vehicle driver and passenger that receive the information can manually perform an action of parking into the parking position 103 using the information as assistance reference for manual parking. Optionally, the information for assisting in manual parking includes information about the parking position 103 and information about the current position of the vehicle 104. Step 360 is performed after step 358.

In step 360, the system 500 determines, based on a monitoring result of the monitoring apparatus 105, whether the vehicle 104 is parked into the parking position 103. If the vehicle is parked into the parking position, the system 500 further performs step 362. If the vehicle is not parked into the parking position, step 330 is performed again, so that the monitoring process of the method 200 is performed again to cyclically monitor the monitoring area 102 outside the battery swap station 100.

In step 362, the system 500 informs the vehicle 104 of a message indicating that the vehicle 104 has been parked into the parking position 103. Step 362 indicates that the station side of the battery swap station 100 confirms that the vehicle 104 has been parked in place into the parking position 103. Step 370 is performed after step 362.

In step 370, the system 500 receives a confirmation message from the vehicle 104. After the station side confirms that the vehicle 104 has been parked in place into the parking position 103, the side of the vehicle 104 further needs to monitor whether the vehicle is parked in place into the parking position 103. In the disclosure, through interactive confirmation of the station side and the vehicle side, unified cognition of the station side and the vehicle side that the vehicle 104 is parked in place into the parking position 103 is ensured. Step 372 is performed after step 370.

In step 372, the system 500 determines whether the confirmation message received from the vehicle 104 indicates that the vehicle 104 is parked in place. If the confirmation message indicates that the vehicle 104 is parked in place, the system 500 performs step 380. If the confirmation message indicates that the vehicle 104 is not parked in place, the system 500 performs step 330 again, so that the monitoring process of the method 200 is performed again to cyclically monitor the monitoring area 102 outside the battery swap station 100.

In step 380, the system 500 informs the battery swap station 200 to prepare for a battery swap. Step 380 indicates that through duplex confirmation of the vehicle side and the station side, the vehicle 104 has been parked in place into the parking position 103, and a subsequent battery swap action can be performed. End step 390 is performed after step 380, to end the current step of the method 200 for assisting in parking the vehicle 104 into the parking position 103.

A position representation manner of the position of the vehicle 104 and the parking position 103 is described below with reference to FIG. 4.

FIG. 4 shows a position representation manner for describing a position of a vehicle 104 and a parking position 103 according to an embodiment of the disclosure. In this embodiment, the position of the vehicle 104 and the parking position 103 are described by a coordinate system.

As shown in FIG. 4, to accurately describe the position of the vehicle 104, the parking position 103, and the offset between the position of the vehicle 104 and the parking position 103, the coordinate system is established based on the cuboid battery swap station 100 in the disclosure. In the disclosure, an axis Z is established based on a straight line parallel to the height of the battery swap station 100, and a plane in which an axis X and an axis Y are located is established based on a plane in which the parking position 103 is located. Optionally, in the disclosure, the axis Z is established close to a vertical extending lateral edge (corresponding to the height of the battery swap station 100) on the front left side of the battery swap station 100, and the upward extending direction is set as a forward direction of the axis Z. The axis Y is established close to a bottom edge (corresponding to the length of the battery swap station 100) on the front side of the battery swap station 100, and the rightward extending direction is set as a forward direction of the axis Y The axis X is established close to a bottom edge (corresponding to the width of the battery swap station 100) on the left side of the battery swap station 100, and the forward extending direction is set as a forward direction of the axis X.

The established coordinate system facilitates description of relevant position information for assisting in parking the vehicle 104 into the parking position 103. The position information of the vehicle 104 includes site information and pose information of the vehicle 104 in the plane formed with the axis X and the axis Y. Optionally, the pose information of the vehicle 104 includes an inclination angle of the vehicle 104 in the plane formed with the axis X and the axis Y Information about the inclination angle of the vehicle 104 may be provided based on a standard inclination angle at which the vehicle 104 is completely parked into the parking position 103. As shown in FIG. 4, optionally, the standard inclination angle at which the vehicle 104 is completely parked into the parking position 103 is represented by an arrow 401. The inclination angle of the vehicle 104 is an angle offset of the vehicle 104 relative to the standard inclination angle 401.

The system 500 for assisting in parking the vehicle 104 into the parking position 103 according to one implementation of the disclosure will be described below in conjunction with FIG. 5.

FIG. 5 is a schematic diagram of the system 500 for assisting in parking the vehicle 104 into the parking position 103 according to an embodiment of the disclosure. As shown in FIG. 5, the system 500 includes: a monitoring unit 510, a guiding unit 520, a determining unit 530, and a confirmation unit 540.

The monitoring unit 510 includes the monitoring apparatus 105 disposed on the battery swap station 100, so that the monitoring apparatus 105 monitors the monitoring area 102 outside the battery swap station 100. Optionally, the monitoring apparatus 105 includes a lidar sensor and/or an image sensor. In some embodiments, the image sensor (for example, a camera) on the side of the battery swap station 100 may be used as an input for the system 500 in the disclosure, and is compatible with another positioning or image sensor such as a lidar and mounted in a position calibrated by the station side to perform sampling on the monitoring area 102 outside the station.

Optionally, the guiding unit 520 is configured to: when the vehicle 104 sends a message about the driving mode of the vehicle 104 to the system 500, receive the message of the driving mode, and determine, based on a type of the received driving mode, a parking assistance action that is further performed by the system 500 and that is used for assisting in parking the vehicle 104 into the parking position 103. The type of the driving mode includes a manual driving mode and an autonomous driving mode. If the driving mode received by the system 500 is the manual driving mode, a driver and a passenger in the vehicle 104 is informed of position information of the parking position 103 and position information of the vehicle 104, to assist in parking the vehicle 104 in the manual driving mode into the parking position 103. If the driving mode is the autonomous driving mode, when the monitoring apparatus 105 monitors the vehicle 104, an offset between a current position of the vehicle 104 and the parking position 103 is calculated, and the vehicle 104 is informed of calculated offset information and position information of the vehicle 104, to assist in parking the vehicle 104 in the autonomous driving mode into the parking position 103.

The determining unit 530 is configured to: when the monitoring unit 510 detects the vehicle 104, be capable of determining, based on a monitoring result of the monitoring unit 510, whether the vehicle 104 is parked into the parking position 103.

The confirmation unit 540 is configured to: when the determining unit 530 determines that the vehicle 104 is parked into the parking position 103, inform the vehicle 104 of a message indicating that the vehicle 104 has been parked into the parking position 103, and receive a confirmation message from the vehicle 104. In other words, when the vehicle 104 receives a message informed of by the system 500 and indicating that the vehicle 104 has been parked into the parking position 103, the side of the vehicle 104 starts to monitor whether the vehicle is parked into the parking position 103, and sends a monitoring result as the confirmation message to the system 500. When the vehicle side monitors that the vehicle is completely parked into the parking position 103, the confirmation message indicating that the vehicle 104 has been parked in place is sent to the system 500. The confirmation message indicates that the vehicle 104 is completely parked in place. When the vehicle side monitors that the vehicle is not completely parked into the parking position 103, the confirmation message indicating that the vehicle 104 is not parked in place is sent to the system 500. The confirmation message indicates that the vehicle 104 is not parked in place. In the disclosure, through duplex confirmation of the station side and the vehicle side, monitoring that the vehicle 104 is completely parked into the parking position 103 is ensured.

Optionally, when the vehicle 104 sends to the system 500 the confirmation message indicating that the vehicle 104 is completely parked in place, the system 500 confirms that the vehicle 104 has well prepared for a subsequent battery swap, and the battery swap station 100 can be further informed to prepare for a battery swap.

The disclosure further provides a computer storage medium. The computer storage medium includes instructions. When the instructions are run, the method 200 for assisting in parking the vehicle 104 into the parking position 103 described above is performed. The computer storage medium mentioned herein includes various types of computer storage media, and may be any usable medium accessible to a general-purpose or special-purpose computer. For example, the computer storage medium may include a RAM, a ROM, an EPROM, an E2PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor.

The system 500 and the method 200 for assisting in parking the vehicle 104 into the parking position 103 in the disclosure are designed for a scenario of the battery swap station 100, and start to run after the vehicle 104 with a battery to be swapped is permitted to perform a battery swap. The method 200 in the disclosure may independently serve as an intelligent and automatic function for the side of the battery swap station 100, or may become a step in a full-self-service battery swap service process. After being permitted to perform a battery swap, the vehicle 104 with a battery to be swapped may be continuously helped by the system 500 to be parked into the parking position 103. Optionally, the system 500 may help a driver and a passenger or an autonomous driving system of the vehicle 104 to accurately park the vehicle into the parking position 103 outside the battery swap station 100, to lay a foundation for further parking into a battery swap area in the battery swap station 100.

The system 500 and the method 200 for assisting in parking the vehicle 104 into the parking position 103 in the disclosure are applicable to a scenario of a full-self-service battery swap station 100, and may also be compatible with a scenario of an attended battery swap station 100. The system 500 in the disclosure can actively calculate whether the vehicle 104 is parked into the parking position 103, and actively communicate with the vehicle side about whether the vehicle 104 is parked in place into the parking position 103. When the system 500 in the disclosure is used to assist in parking, the vehicle side has initiative in selection, and the vehicle side may synchronize a final monitoring result to the system 500 after monitoring the vehicle 104. The method for assisting in parking the vehicle 104 into the parking position 103 in the disclosure has a small computing amount, and portability of an edge computing side is high.

The system 500 in the disclosure may be disposed on the side of the battery swap station 100. Through cooperation of the vehicle side and the station side, the battery swap station 100 actively and directly manages the vehicle 104. For a full-self-service battery swap, the system 500 in the disclosure may monitor, according to the AI algorithm, whether the vehicle 104 is parked into the parking position 103. In addition, through interaction of the vehicle side and the station side, unified cognition of the vehicle side and the station side that the vehicle is parked in place is ensured.

The embodiments and examples proposed herein in the disclosure are provided to describe as adequately as possible embodiments according to the technology and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A method for assisting in parking a vehicle into a parking position, wherein the parking position is located outside a battery swap station, and the method comprises:
a monitoring step, wherein the monitoring step comprises: starting a monitoring apparatus disposed on the battery swap station, so that the monitoring apparatus monitors an external area of the battery swap station;
a determining step, wherein the determining step comprises: determining, based on a monitoring result of the monitoring step, whether the vehicle is parked into the parking position, wherein if the vehicle is parked into the parking position, the confirmation step is further performed, or if the vehicle is not parked into the parking position, the monitoring step continues to be performed; and
a confirmation step, wherein the confirmation step comprises: outputting a message indicating that the vehicle has been parked into the parking position, and receiving a confirmation message from the vehicle, wherein if the confirmation message indicates that the vehicle has been parked in place, it indicates that the vehicle is completely parked in place into the parking position, or if the confirmation message indicates that the vehicle is not parked in place, the monitoring step is further performed.

2. The method according to claim 1, wherein the method further comprises:
a guiding step, wherein the guiding step comprises: receiving from the vehicle a message about a driving mode of the vehicle, and performing different parking assistance actions based on types of the driving mode.

3. The method according to claim 2, wherein
the different parking assistance actions comprise: if the driving mode is a manual driving mode, informing a driver and a passenger in the vehicle of position information of the parking position and position information of the vehicle; or if the driving mode is an autonomous driving mode, when the monitoring apparatus monitors the vehicle, calculating an offset between a current position of the vehicle and the parking position, and informing the vehicle of calculated offset information and position information of the vehicle.

4. The method according to any one of claims 1 to 3, wherein
the confirmation step further comprises: if the confirmation message indicates that the vehicle has been parked in place, informing the battery swap station to prepare for a battery swap.

5. The method according to any one of claims 1 to 4, wherein
the monitoring apparatus comprises a lidar sensor and/or an image sensor.

6. A system for assisting in parking a vehicle into a parking position, wherein the parking position is located outside a battery swap station, and the system comprises:
a monitoring unit, wherein the monitoring unit comprises a monitoring apparatus, and the monitoring apparatus is disposed on the battery swap station, so that the monitoring unit is capable of performing a monitoring step to monitor an external area of the battery swap station;
a determining unit, wherein the determining unit is communicatively connected to the monitoring unit, and the determining unit is configured to be capable of determining, based on a monitoring result of the monitoring unit, whether the vehicle is parked into the parking position; and
a confirmation unit, wherein the confirmation unit is communicatively connected to the determining unit and the monitoring unit, and the confirmation unit is configured to: when the determining unit determines that the vehicle is parked into the parking position, output a message indicating that the vehicle has been parked into the parking position, and receive a confirmation message from the vehicle, wherein if the confirmation message indicates that the vehicle has been parked in place, it indicates that the vehicle is completely parked in place into the parking position, or if the confirmation message indicates that the vehicle is not parked in place, the monitoring unit is informed to further perform the monitoring step.

7. The system according to claim 6, wherein the system further comprises:
a guiding unit, wherein the guiding unit is configured to: receive from the vehicle a message about a driving mode of the vehicle, and perform different parking assistance actions based on types of the driving mode.

8. The system according to claim 7, wherein
the different parking assistance actions comprise: if the driving mode is a manual driving mode, informing a driver and a passenger in the vehicle of position information of the parking position and position information of the vehicle; or if the driving mode is an autonomous driving mode, when the monitoring apparatus monitors the vehicle, calculating an offset between a current position of the vehicle and the parking position, and informing the vehicle of calculated offset information and position information of the vehicle.

9. The system according to any one of claims 6 to 8, wherein
the determining unit is further configured to: if the confirmation message indicates that the vehicle has been parked in place, inform the battery swap station to prepare for a battery swap.

10. The system according to any one of claims 6 to 9, wherein
the monitoring apparatus comprises a lidar sensor and/or an image sensor.

11. A computer storage medium, wherein the computer storage medium comprises instructions, and when the instructions are run, the method for assisting in parking a vehicle into a parking position according to any one of claims 1 to 5 is performed.

12. A battery swap station, wherein the battery swap station comprises the system for assisting in parking a vehicle into a parking position according to any one of claims 6 to 10.
